# EUROPÄISCHE PATENTSCHRIFT

(11) **EP 1 902 598 B1**
(45) Veröffentlichungstag und Bekanntmachung des Hinweises auf die Patenterteilung: **06.05.2009**
(21) Anmeldenummer: 06761771.2
(22) Anmeldetag: 06.07.2006
(51) Int. Cl.: H05B 41/285, H02H 7/125

(54) **SCHALTUNGSANORDNUNG UND VERFAHREN ZUM BETRIEB MINDESTENS EINER ELEKTRISCHEN LAMPE**
CIRCUIT ARRANGEMENT AND METHOD FOR OPERATING AT LEAST ONE ELECTRIC LAMP
ENSEMBLE CIRCUIT ET PROCEDE POUR FAIRE FONCTIONNER AU MOINS UNE LAMPE ELECTRIQUE

(30) Priorität: 14.07.2005 DE 102005032960
(43) Veröffentlichungstag der Anmeldung: 26.03.2008
(73) Patentinhaber: Osram Gesellschaft mit beschränkter Haftung, 81543 München (DE)
(72) Erfinder: FISCHER, Klaus, 86316 Friedberg (DE)
(86) Internationale Anmeldenummer: PCT/DE2006/001169
(87) Internationale Veröffentlichungsnummer: WO 2007/006273

(56) Entgegenhaltungen:
- EP-A1- 0 753 987
- WO-A-96/09676
- JP-A- 1 091 620
- US-A- 5 287 046

## Beschreibung

Die vorliegende Erfindung betrifft eine Schaltungsanordnung zum Betrieb mindestens einer elektrischen Lampe mit einem Wechselrichter mit mindestens einem ersten und einem zweiten in Serie zueinander angeordneten Brückentransistor, einer ersten Ansteueranschaltung für den ersten Brückentransistor, einer zweiten Ansteuerschaltung für den zweiten Brückentransistor, wobei die erste und die zweite Ansteuerschaltung ausgelegt sind, den ersten und den zweiten Brückentransistor derart anzusteuern, dass diese im Normalbetrieb der Lampe alternierend voll ein-und ausschalten, und mit mindestens einer Schutzvorrichtung.. Sie betrifft überdies ein Betriebsverfahren für mindestens eine elektrische Lampe an einer derartigen Schaltungsanordnung.

### Stand der Technik

Eine gattungsgemäße Schaltungsanordnung ist bekannt aus der EP 0 753 987. Dabei ist die Schutzvorrichtung ausgelegt, bei Detektion eines anomalen Betriebszustands, beispielsweise einer defekten Lampe oder einer altersbedingt erhöhten Brennspannung, die Oszillation der Halbbrücke zu stoppen. Zur Detektion eines anomalen Betriebszustands wird ein Abschaltsignal ausgewertet, das zwei Spannungskomponenten umfasst, nämlich eine Spannung, die proportional zur Lampenspannung ist, sowie ein Synchronisationssignal, das proportional zur zeitlichen Ableitung der Wechselrichterausgangsspannung ist.

Die vorliegende Erfindung betrifft eine andere Problematik und zwar den Schutz von Brückentransistoren in einer gattungsgemäßen Schaltungsanordnung vor Überspannungsschäden. Sie wird nachfolgend am Beispiel einer Halbbrückenanordnung in einem elektronischen Vorschaltgerät für Kompaktleuchtstofflampen (Energiesparlampen) beschrieben. Prinzipiell kann die erfindungsgemäße Lösung aber auch für Vollbrücken- oder andere Brückenschaltungen in beliebigen Geräten verwendet werden.

Zur Problematik: Alle üblichen elektronischen Vorschaltgeräte wandeln die niederfrequente Netzwechselspannung in eine hochfrequente Wechselspannung zur Versorgung einer Niederdruckentladungslampe um. Dazu wird mit einem Gleichrichter die Netzspannung in eine pulsierende Gleichspannung umgewandelt. Ein nachgeschalteter Siebkondensator glättet diese pulsierende Gleichspannung zu einer ausreichend konstanten Gleichspannung. Mit einer Brückenschaltung wird dann die konstante Gleichspannung des Siebkondensators in eine hochfrequente Wechselspannung "zerhackt", die dann über eine Induktivität und mindestens einen Koppelkondensator beispielsweise an eine Lampe angelegt wird und diese versorgt. Der Wert der Brückenspannung ist identisch mit der Spannung dieses Siebkondensators, der sich in jeder Netzhalbwelle auf den Spitzenwert der Netzspannung auflädt.

Bei Brückenschaltungen ist mit Ausnahme kurzer Kommutierungsphasen immer ein Transistor je Brückenzweig voll eingeschaltet; die ganze Brückenspannung liegt demnach immer an dem anderen, ausgeschalteten Transistor an. "Voll eingeschaltet" bzw. "ausgeschaltet" bedeutet im Sinne der vorliegenden Erfindung den nicht-linearen Schaltbetrieb eines Transistors. Der Begriff "eingeschaltet" umfasst demnach eine Ansteuerung des Brückentransistors, so dass dieser "voll eingeschaltet ist" als auch eine Ansteuerung des Brückentransistors, so dass dieser im linearen Betrieb betrieben wird. Da, wie erwähnt, die gesamte Brückenspannung immer an dem ausgeschalteten Transistor anliegt, muss die Spannungsfestigkeit beider Brückentransistoren deshalb mindestens so groß sein, wie der maximal mögliche Spitzenwert der Brückenspannung.

Nun muss zusätzlich berücksichtigt werden, dass die Netzspannung durch Umwelteinflüsse mit hohen Spannungsspitzen, so genannten Surge-Pulsen, überlagert sein kann. Diese Spannungsspitzen können Amplituden mit einem vielfachen Wert der Höhe der Netzspannung erreichen und haben Periodendauern von wenigen Mikrosekunden bis wenige Millisekunden. Die Norm EN 61547 legt für standardisierte Messungen die Kurvenform eines dreieckförmigen Normpulses mit einer Anstiegszeit der Spannung von 1,2 µs und einer Abfallzeit von 50 µs fest. Lampen mit integriertem Vorschaltgerät müssen so ausgeführt sein, dass Pulse mit dieser Kurvenform bis zu Amplituden von 500 V keinen Ausfall der Lampe nach sich ziehen. In der Realität können aber auch Pulse mit deutlich höheren Amplituden auftreten, insbesondere verursacht durch Blitzeinschläge in Einrichtungen der Stromversorgung oder durch induktive Lasten im gleichen Stromkreis.

Wird eine Lampe mit solchen Spannungsspitzen beaufschlagt, lädt sich der Siebkondensator auf deutlich höhere Spannungen auf. Aus diesem Grund muss die Spannungsfestigkeit der Brückentransistoren der Halbbrücke höher als der maximale Spitzenwert der Netzspannung sein. Die minimale Spannungsfestigkeit wird in Abhängigkeit der Spannungswerte festgestellt, auf die der Siebkondensator beim Auftreten von Spannungsspitzen, insbesondere Surge-Pulsen, maximal aufgeladen wird.

Bei den üblicherweise zur Siebung verwendeten Elektrolytkondensatoren steigt die Spannung beispielsweise nicht bis auf den Wert der Amplituden des Surge-Pulses an, sondern wird durch chemische und/oder elektrische Prozesse in diesem Elektrolytkondensator auf einen im Wesentlichen durch die Eigenschaften des Elektrolytmaterials definierten Maximalwert begrenzt. Die Verwendung relativ hochohmiger Eingangsimpedanzen, d. h. eines hochohmigen seriellen Widerstands in mindestens einer der Netzzuleitungen, kann auch zu einer Verringerung der maximal auftretenden Spannungswerte am Siebkondensator führen.

Zusätzlich muss bei Brückenschaitungen berücksichtigt werden, dass bei einem beginnenden Spannungsdurchbruch des momentan ausgeschalteten Brückentransistors keine Strombegrenzung vorhanden ist, weil der andere Brückentransistor voll eingeschaltet ist und sich damit ein zweiter Strompfad parallel zum Siebkondensator über beide Brückentransistoren ausbilden kann. Die Fähigkeit von MOS-Transistoren, bei Überschreiten ihrer Sperrspannung einen begrenzten Strom störungsfrei fließen zu lassen, die so genannte Avalanche-Festigkeit, ist als Selbstschutz nicht ausreichend. Die Energie, die ein MOS-Transistor in diesem Betriebsmodus, dem so genannten Avalanche-Betrieb, absorbieren kann, ist im Vergleich zu der Energie des Surge-Pulses deutlich zu klein.

Da vor allem bei MOS-Transistoren die Spannungsfestigkeit aufgrund der quadratischen Abhängigkeit einen großen Einfluss auf die erforderliche Siliziumchipfläche hat, ist es aus Kostengründen sehr vorteilhaft, die minimal erforderliche Spannungsfestigkeit möglichst niedrig festzulegen. Im Idealfall muss sie nur geringfügig höher als der maximale Amplitudenwert der Netzeingangsspannung sein.

### Darstellung der Erfindung

Die Aufgabe der vorliegenden Erfindung besteht darin, eine gattungsgemäße Schaltungsanordnung bzw. ein gattungsgemäßes Verfahren derart weiterzubilden, dass der Einsatz von Brückentransistoren mit einer reduzierten Spannungsfestigkeit ermöglicht wird, ohne dabei die Betriebssicherheit beim Auftreten hoher Surge-Pulse zu beeinträchtigen.

Diese Aufgabe wird gelöst durch eine Schaltungsanordnung mit den Merkmalen von Patentanspruch 1 und durch ein Betriebsverfahren mit den Merkmalen von Patentanspruch 12.

Der Erfindung liegt die Idee zugrunde, dass beim Auftreten hoher Spannungsspitzen auf der Versorgung der ausgeschaltete Brückentransistor ausgeschaltet bleibt und der eingeschaltete Brückentransistor derart angesteuert wird, dass er nicht mehr voll eingeschaltet ist. Dadurch wird eine Aufteilung der hohen Brückenspannung auf beide Brückentransistoren ermöglicht. Das dabei verursachte kurze Verlöschen der Lampe kann ohne weiteres in Kauf genommen werden.

Durch die erfindungsgemäße Lösung kann erreicht werden, dass auch bei hohen Spannungen am Siebkondensator während des Auftretens von Surge-Pulsen die Spannung an jedem einzelnen Brückentransistor weniger als die Brückenspannung beträgt. Wird der gerade eingeschaltete Transistor derart angesteuert, dass er nunmehr im linearen Bereich betrieben wird, verteilt sich zwar die Brückenspannung auf beide Brückentransistoren, wobei jedoch über den ausgeschalteten Brückentransistor ein größerer Anteil der Brückenspannung anliegt als über den im linearen Bereich betriebenen. Wird alternativ der gerade voll eingeschaltete Brückentransistor der Serienschaltung bei der Detektion eines Surge-Pulses derart angesteuert, dass er ebenfalls ausgeschaltet wird, beträgt die an jedem einzelnen Brückentransistor abfallende Spannung nur ungefähr die Hälfte der Brückenspannung. Dies bedeutet, dass die maximale Brückenspannung den Wert der Summe der Spannungsfestigkeiten der einzelnen Brückentransistoren eines Brückenzweigs erreichen kann, ohne dass Beschädigungen in der Schaltungsanordnung auftreten. Bei einer Anordnung ohne Schutzvorrichtung dürfte die Brückenspannung zur Vermeidung von Ausfällen nur so groß sein, wie die Spannungsfestigkeit des Brückentransistors mit der niedrigsten Spannungsfestigkeit.

Ein weiterer Vorteil der erfindungsgemäßen Lösung besteht darin, dass sich parallel zum Siebkondensator kein zweiter Ableit-Strompfad für die Energie eines Surge-Pulses über die Brückentransistoren ausbilden kann. Zum einen bedeutet dies, dass die gesamte Energie des Surge-Pulses im Wesentlichen im Siebkondensator in Wärme umgewandelt wird. In diesem Zusammenhang ist darauf hinzuweisen, dass in den Widerständen der Schutzvorrichtungen, auf die weiter unten noch näher eingegangen wird, die zu Messzwecken enthalten sind, nur vernachlässigbare Anteile der Energie des Surge-Pulses absorbiert werden. Zum anderen werden die Brückentransistoren auch dann vor Überlastung geschützt, wenn durch die resonante Struktur eines Lastkreises, zum Beispiel durch einen in der Lampendrossel eingeprägten Strom, die Spannung über einem der Brückentransistoren so groß wird, dass dieser Transistor in den oben beschriebenen Avalanche-Betrieb übergeht und die in dieser Drossel gespeicherte Energie für diesen Transistor ableitet. Da der momentan voll eingeschaltete Transistor durch die erfindungsgemäße Schutzschaltung in den linearen Betrieb gebracht oder ausgeschaltet wird, ist die Zuführung von Teilen der Energie eines Surge-Pulses zu dem im Avalanche-Betrieb befindlichen Transistor nicht möglich.

Eine bevorzugte Ausführungsform zeichnet sich dadurch aus, dass sie eine erste und eine zweite Schutzvorrichtung umfasst, wobei die erste Schutzvorrichtung ausgelegt ist, den zweiten Brückentransistor auszuschalten, wenn eine erste Referenzspannung, die mit der am ersten Brückentransistor anliegenden Spannung korreliert ist, einen vorgebbaren Grenzwert überschreitet, und wobei die zweite Schutzvorrichtung ausgelegt ist, den ersten Brückentransistor auszuschalten, wenn eine zweite Referenzspannung, die mit der am zweiten Brückentransistor anliegenden Spannung korreliert ist, einen vorgebbaren Grenzwert überschreitet. Durch das Vorsehen von zwei Schutzvorrichtungen kann zu jedem Zeitpunkt des Auftretens einer Spannungsspitze der gerade eingeschaltete Brückentransistor in den linearen Betrieb geschaltet oder ausgeschaltet werden. Im Falle einer Vollbrückenanordnung anstelle einer Halbbrückenanordnung werden bevorzugterweise vier Schutzvorrichtungen vorgesehen.

Es ist weiterhin bevorzugt, wenn jeder Brückentransistor einen Steueranschluss aufweist und dann mindestens eine Schutzvorrichtung zwischen die Ansteuerschaltung und den Steueranschluss des zugehörigen Brückentransistors gekoppelt ist. Durch diese Maßnahme kann ein Schutz des Brückentransistors ohne Verwendung von Leistungsbauelementen in der Schutzvorrichtung vorgesehen werden.

In einer Weiterbildung dieser Ausführungsform weist jeder Transistor bevorzugt einen Bezugsanschluss auf, wobei die mindestens eine Schutzvorrichtung parallel zur Strecke Steueranschluss-Bezugsanschluss des zugehörigen Brückentransistors angeordnet ist und ausgelegt ist, zum Ausschalten die Strecke Steueranschluss-Bezugsanschluss des zugehörigen Brückentransistors kurzzuschließen. Durch diese Maßnahme wird das Ansteuersignal der Ansteuerschaltung vom Signal der Schutzvorrichtung in dem Fall, in dem die Schutzvorrichtung anspricht, überdeckt. Im Normalbetrieb der Lampe stört die Schutzvorrichtung die Ansteuerschaltung nicht.

Bevorzugt ist der vorgebbare Grenzwert kleiner oder gleich der maximal zulässigen Sperrspannung oder kleiner oder gleich der Durchbruchspannung eines Brückentransistors. Damit kann die Spannungsfestigkeit der Brückentransistoren optimal ausgenutzt werden. Erst wenn die Spannungsfestigkeit nicht mehr ausreicht, spricht die zugehörige Schutzvorrichtung an.

Bevorzugt ist weiterhin, wenn die jeweilige Referenzspannung der jeweiligen Referenzspannung über dem ausgeschalteten Brückentransistor entspricht. Es kann jedoch auch vorgesehen werden, dass die jeweilige Referenzspannung der Summe folgender Spannungen entspricht: der Spannung über dem ausgeschalteten Brückentransistor und der Spannung am Ausgang der Ansteuerschaltung des eingeschalteten Brückentransistors. Im letztgenannten Fall ist die Spannung am Ausgang der Ansteuerschaltung des eingeschalteten Transistors bei der Dimensionierung des vorgebbaren Grenzwerts zu berücksichtigen.

Bevorzugt ist die Schutzvorrichtung weiterhin ausgelegt, den zugehörigen Brückentransistor solange ausgeschaltet zu lassen, bis der Wert der Referenzspannung wieder unter den vorgebbaren Grenzwert gesunken ist. Dadurch wird der ausgeschaltete Zustand der Lampe auf das Minimum begrenzt, das zum Schutz der Brückentransistoren nötig ist. Die Zeitdauer ohne Lichterzeugung ist daher minimal.

Weitere vorteilhafte Ausführungsformen ergeben sich aus den Unteransprüchen.

### Kurze Beschreibung der Zeichnungen

Im Nachfolgenden werden zwei Ausführungsbeispiele einer erfindungsgemäßen Schaltungsanordnung unter Bezugnahme auf die beigefügten Zeichnungen näher beschrieben. Es zeigen:
- Figur 1: ein erstes Ausführungsbeispiel einer erfindungsgemäßen Schaltungsanordnung mit zwei N-Kanal-MOS-Transistoren als Brückentransistoren; und
- Figur 2: ein zweites Ausführungsbeispiel einer erfindungsgemäßen Schaltungsanordnung mit komplementären Brückentransistoren.

### Bevorzugte Ausführung der Erfindung

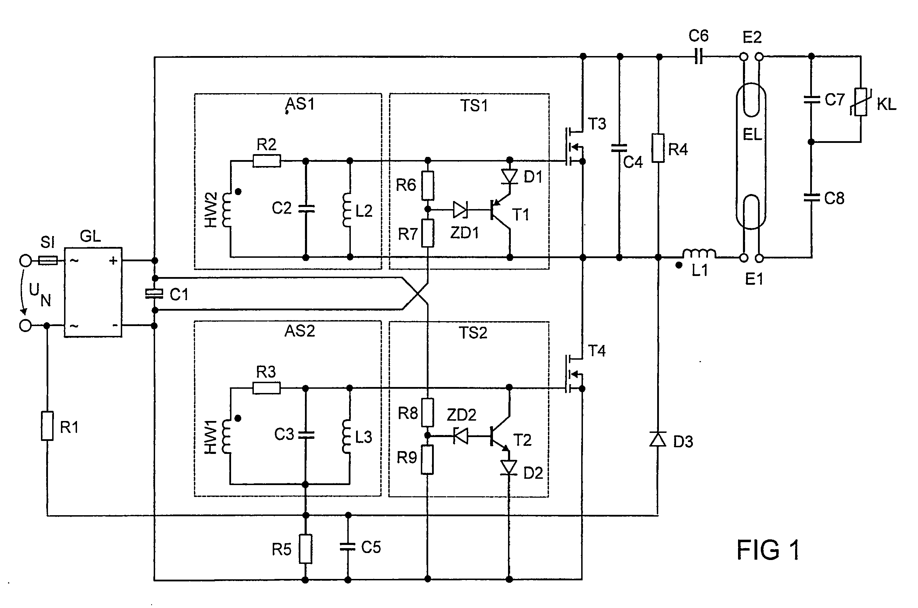

Figur 1 zeigt eine erfindungsgemäße Schaltungsanordnung mit einer Halbbrückenanordnung, die zwei N-Kanal-MOS-Transistoren T3, T4 mit jeweils eigener Ansteuerschaltung AS1, AS2 umfasst. Die Funktionsweise dieser Schaltungsanordnung ist genauer in der Patentschrift EP 0 781 077 B1 und der EP 0 917 412 B1 beschrieben. Diese Funktionsweise ist jedoch für die nachfolgenden Ausführungen im Hinblick auf Sinn und Zweck der vorliegenden Erfindung unrelevant. Deshalb soll nur kurz auf die Bauelemente eingegangen werden, die nachfolgend im Rahmen der Darstellung der Erfindung nicht weiter erwähnt werden: Der Halbbrückenmittelpunkt ist über eine Drossel L1 mit einer ersten Elektrode E1 der Lampe EL verbunden, während eine zweite Elektrode E2 der Lampe über einen Kondensator C6 mit einem Siebkondensator C1 verbunden ist. Parallel zum Brückentransistor T3 ist die Parallelschaltung eines Kondensators C4 und eines ohmschen Widerstands R4 angeordnet. Ausgangsseitig ist parallel zur Lampe EL die Serienschaltung zweier Kondensatoren C7 und C8 angeordnet, wobei dem Kondensator C7 ein Kaltleiter KL parallelgeschaltet ist. Eingangsseitig liegt die Netzspannung U_{N} über eine Sicherung SI und einen Gleichrichter GL an dem Siebkondensator C1 an. Die Widerstände R1 und R5 sowie der Kondensator C5 und die Diode D3 sind Elemente einer Anlaufschaltung wie sie genauer in der bereits erwähnten EP 0917 412 B1 beschrieben ist. Im Hinblick auf die vorliegende Erfindung sind sie jedoch ohne Relevanz, weshalb nicht weiter darauf eingegangen wird.

In Figur 1 ist für jeden Transistor T3, T4 der Halbbrückenanordnung eine eigene Schutzschaltung TS1, TS2 vorgesehen. Der Transistor T3 wird durch die Schutzschaltung TS2 geschützt, der Transistor T4 durch die Schutzschaltung TS1. Die Schutzwirkung für den Brückentransistor T3 ergibt sich durch das durch die Schutzschaltung TS2 ermöglichte sofortige Ausschalten des Brückentransistors T4. Die Schutzwirkung für den Brückentransistor T4 ergibt sich durch das durch die Schutzschaltung TS1 ermöglichte sofortige Ausschalten des Brückentransistors T3.

Die Schutzschaltungen TS1 und TS2 sind in Serie zwischen die Ansteuerschaltungen AS1 und AS2 einerseits und die Steueranschlüsse der Brückentransistoren T3 und T4 andererseits geschaltet. Beide Schutzschaltungen TS1, TS2 sind so ausgeführt, dass bei Überschreiten eines vorgebbaren Werts der Spannung über einem Brückentransistor T3, T4 der andere Brückentransistor T4, T3 unverzüglich aktiv ausgeschaltet wird, indem der Steuereingang des jeweiligen Brückentransistors mit dem entsprechenden Bezugspotential niederohmig verbunden wird, d. h. der Steuereingang kurzgeschlossen wird. Dabei ist es möglich, diesen vorgebbaren Wert in Abhängigkeit von der Spannungsfestigkeit des zu schützenden Transistors einzustellen. Es ist auch möglich, dass beide Schutzschaltungen TS1, TS2 unterschiedliche Spannungswerte haben, die zum Ausschalten eines Brückentransistors führen.

In jeder der Schutzschaltungen TS1, TS2 wird ein Transistor T1, T2 verwendet, der ein Kurzschließen des Steuereingangs eines Brückentransistors T3, T4 ermöglicht. Da die Ausgangsspannung der Ansteuerschaltungen AS1, AS2 auch negative Werte annehmen kann, sind zum Schutz der Transistoren T1, T2 in den Schutzschaltungen TS1, TS2 seriell Dioden so in die Emitteranschlüsse geschaltet, dass die Basis-Emitterdiode der Transistoren T1 und T2 nicht überlastet wird. Diese Dioden D1, D2 können alternativ auch in die Kollektoranschlüsse geschaltet werden. Wenn andere Ansteuerschaltungen AS1, AS2 verwendet werden, bei denen die Ausgangsspannung keine negativen Werte annehmen kann, können beide Schutzschaltungen TS1, TS2 ohne die Dioden D1, D2 ausgeführt sein. In diesem Fall sind die Emitteranschlüsse der Transistoren T1, T2 direkt an die Steuereingangsanschlüsse der Brückentransistoren T3, T4 gekoppelt. Durch geeignete Wahl des Verhältnisses von zwei seriellen Widerständen R6/R7, R8/R9 wird der Wert der Summe aus der Brückenspannung und der Ausgangsspannung der entsprechenden Ansteuerschaltung AS1, AS2 vorgegeben, der zu einem Einschalten des Transistors T1, T2 in der Schutzschaltung TS1, TS2 und damit zum Ausschalten eines Brückentransistors T3, T4 führt. Dazu ist die Serienschaltung der Widerstände R6/R7, R8/R9 einer Schutzschaltung TS1, TS2 so angeordnet, dass ein Anschluss an den Steuereingangsanschluss eines Brückentransistors T3, T4 und der andere Anschluss an das Brückenpotential am Siebkondensator C1, das nicht unmittelbar mit dem auszuschaltenden Brückentransistor T4, T3 verbunden ist, gekoppelt ist.

Um das Einschalten des Transistors T1, T2 an einer Schutzschaltung TS1, TS2 unabhängig von der .temperaturabhängigen Schaltschwelle dieses Transistors T1, T2 zu machen, ist in Serie zum Steueranschluss dieses Transistors eine Zenerdiode ZD1, ZD2 geschaltet. Der Transistor T1, T2 an einer Schutzschaltung TS1, TS2 wird dann eingeschaltet und schließt damit den Steueranschluss des zugeordneten Brückentransistors T3, T4 kurz, wenn die Spannung an dem Widerstand R6, R8 größer als die Summe aus Schwellspannung des Transistors T1, T2 in der Schutzschaltung TS1, TS2 und der Zenerspannung der Zenerdiode ZD1, ZD2 ist.

Dies ist bei der Schutzschaltung TS1, die den mit dem positiven Brückenpotential verbundenen Brückentransistor, den so genannten Highside-Transistor T3, ausschaltet, dann der Fall, wenn die Spannung über dem ohnehin ausgeschalteten Brückentransistor T4 zuzüglich der Ausgangsspannung der eigenen Ansteuerschaltung AS1 einen einstellbaren Wert überschreitet.

Bei der.Schutzschaltung TS2, die den mit dem negativen Brückenpotential verbundenen Brückentransistor, den so genannten Lowside-Transistor T4, ausschaltet, ist dies dann der Fall, wenn die Spannung über dem ohnehin ausgeschalteten Brückentransistor T3 einen einstellbaren Wert übersteigt.

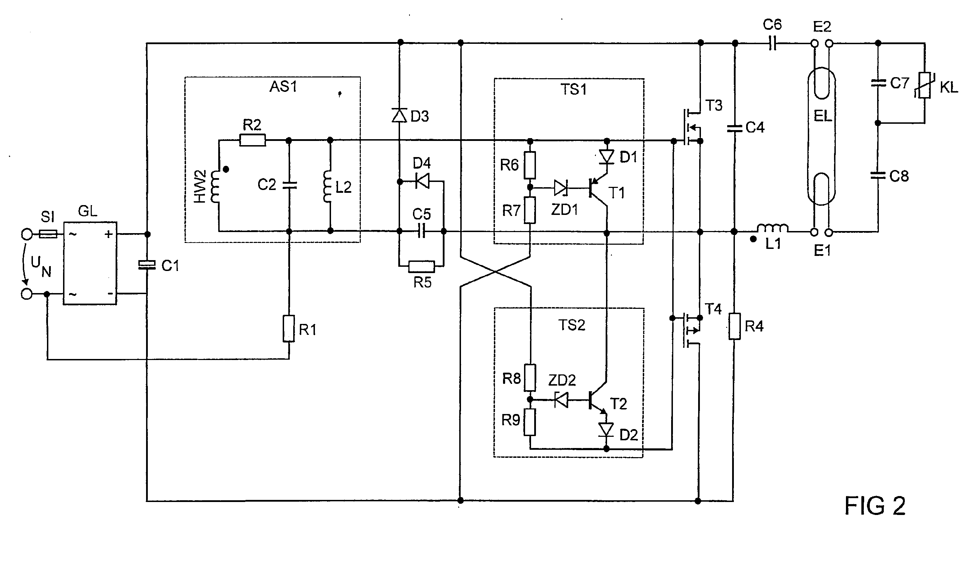

Das Prinzip der mit Bezug auf Figur 1 beschriebenen Schaltungsanordnung lässt sich auch auf Brückenanordnungen mit komplementären Brückentransistoren übertragen. Eine entsprechende Schaltungsanordnung ist in Figur 2 gezeigt.

Bauelemente, die hinsichtlich ihrer Funktion denen von Figur 1 entsprechen, haben dasselbe Bezugszeichen und werden nicht nochmals beschrieben.

In der in Figur 2 dargestellten Halbbrückenanordnung mit komplementären Brückentransistoren T3, T4 sind die Ausgänge der Schutzschaltungen TS1 und TS2 parallelgeschaltet, um in Bezug auf das Brücken-Mittelpotential sowohl positive als auch negative Steuerspannungen kurzzuschließen.

Wie für den Fachmann offensichtlich, sind Abwandlungen der mit Bezug auf Figur 1 und Figur 2 dargestellten Schutzschaltungen denkbar. So ist eine Schutzschaltung realisierbar, die ein bidirektionales Schaltelement, zum Beispiel einen Triac, enthält. Bei Verwendung eines bidirektionalen Schaltelements ist nur eine Schutzschaltung erforderlich, in der dieses bidirektionale Schaltelement sowohl mit einer negativen als auch mit positiven Steuerspannung eingeschaltet werden kann, um ungeachtet der momentanen Polarität der Ausgangsspannung einer Ansteuerschaltung deren Ausgangsspannung kurzschließt.

## Patentansprüche

1. Schaltungsanordnung zum Betrieb mindestens einer elektrischen Lampe (EL) mit
- einem Wechselrichter mit mindestens einem ersten (T3) und einem zweiten (T4) in Serie zueinander angeordneten Brückentransistor,
- einer ersten Ansteuerschaltung (AS1) für den ersten Brückentransistor (T3);
- einer zweiten Ansteuerschaltung (AS2) für den zweiten Brückentransistor (T4);
wobei die erste (AS1) und die zweite (AS2) Ansteuerschaltung ausgelegt sind, den ersten (T3) und den zweiten (T4) Brückentransistor derart anzusteuern, dass diese im Normalbetrieb der Lampe (EL) alternierend voll ein- und ausschalten; und
- mindestens einer Schutzvorrichtung (TS1; TS2);
**dadurch gekennzeichnet, dass** die mindestens eine Schutzvorrichtung (TS1; TS2) ausgelegt ist, bei einem Wert einer Referenzspannung, die mit der Spannung über dem gerade ausgeschalteten Brückentransistor (T3; T4) korreliert ist, über einem vorgebbaren Grenzwert den gerade voll eingeschalteten Brückentransistor (T4; T3) der Serienschaltung derart anzusteuern, dass er nicht mehr voll eingeschaltet ist.

2. Schaltungsanordnung nach Anspruch 1, **dadurch gekennzeichnet, dass** die mindestens eine Schutzvorrichtung (TS1; TS2) ausgelegt ist, bei einem Wert einer Referenzspannung, die mit der Spannung über dem gerade ausgeschalteten Brückentransistor (T3; T4) korreliert ist, über einem vorgebbaren Grenzwert den gerade voll eingeschalteten Brückentransistor (T4; T3) der Serienschaltung derart anzusteuern, dass er im linearen Bereich betrieben wird.

3. Schaltungsanordnung nach Anspruch 1, **dadurch gekennzeichnet, dass** die mindestens eine Schutzvorrichtung (TS1; TS2) ausgelegt ist, bei einem Wert einer Referenzspannung, die mit der Spannung über dem gerade ausgeschalteten Brückentransistor (T3; T4) korreliert ist, über einem vorgebbaren Grenzwert den gerade voll eingeschalteten Brückentransistor (T4; T3) der Serienschaltung derart anzusteuern, dass er ausgeschaltet wird.

4. Schaltungsanordnung nach einem der vorhergehenden Ansprüche, **dadurch gekennzeichnet, dass** sie ausgelegt ist, bei einem Wert einer Referenzspannung, die mit der Spannung über dem gerade ausgeschalteten Brückentransistor (T3; T4) korreliert ist, über einem vorgebbaren Grenzwert beide Brückentransistoren (T3, T4) derart anzusteuern, dass sie, zumindest über einen vorgebbaren Zeitraum, insbesondere bis die Referenzspannung wieder unter den vorgebbaren Grenzwert gesunken ist, ausgeschaltet bleiben.

5. Schaltungsanordnung nach einem der vorhergehenden Ansprüche, **dadurch gekennzeichnet, dass** sie eine erste (TS1) und eine zweite (TS2) Schutzvorrichtung umfasst, wobei die erste Schutzvorrichtung (TS1) ausgelegt ist, den zweiten Brückentransistor (T4) auszuschalten, wenn eine erste Referenzspannung, die mit der am ersten Brückentransistor (T3) anliegenden Spannung korreliert ist, einen vorgebbaren Grenzwert überschreitet, und wobei die zweite Schutzvorrichtung (TS2) ausgelegt ist, den ersten Brückentransistor (T3) auszuschalten, wenn eine zweite Referenzspannung, die mit der am zweiten Brückentransistor (T4) anliegenden Spannung korreliert ist, einen vorgebbaren Grenzwert überschreitet.

6. Schaltungsanordnung nach einem der vorhergehenden Ansprüche, **dadurch gekennzeichnet, dass** jeder Brückentransistor (T3; T4) einen Steueranschluss aufweist, wobei die mindestens eine Schutzvorrichtung (TS1; TS2) zwischen die Ansteuerschaltung (AS1; AS2) und den Steueranschluss des zugehörigen Brückentransistors (T3; T4) gekoppelt ist.

7. Schaltungsanordnung nach Anspruch 6, **dadurch gekennzeichnet, dass** jeder Brückentransistor (T3; T4) einen Bezugsanschluss aufweist, wobei die mindestens eine Schutzvorrichtung (TS1; TS2) parallel zur Strecke Steueranschluss-Bezugsanschluss des zugehörigen Brückentransistors (T3; T4) angeordnet ist und ausgelegt ist, zum Ausschalten die Strecke Steueranschluss-Bezugsanschluss des zugehörigen Brückentransistors (T3; T4) kurzzuschließen.

8. Schaltungsanordnung nach einem der vorhergehenden Ansprüche, **dadurch gekennzeichnet, dass** der vorgebbare Grenzwert kleiner oder gleich der maximal zulässigen Sperrspannung eines Brückentransistors (T3; T4) ist.

9. Schaltungsanordnung nach einem der vorhergehenden Ansprüche, **dadurch gekennzeichnet, dass** die jeweilige Referenzspannung der Spannung über dem ausgeschalteten Brückentransistor (T3; T4) entspricht.

10. Schaltungsanordnung nach einem der Ansprüche 1 bis 8, **dadurch gekennzeichnet, dass** die jeweilige Referenzspannung der Summe folgender Spannungen entspricht:
- der Spannung über dem ausgeschalteten Brückentransistor (T3; T4); und
- der Spannung am Ausgang der Ansteuerschaltung (AS1; AS2) des eingeschalteten Brückentransistors (T3; T4).

11. Schaltungsanordnung nach einem der vorhergehenden Ansprüche, **dadurch gekennzeichnet, dass** die Schutzvorrichtung (TS1; TS2) ausgelegt ist, den zugehörigen Brückentransistor (T3; T4) solange ausgeschaltet zu lassen, bis der Wert der Referenzspannung wieder unter den vorgebbaren Grenzwert gesunken ist.

12. Betriebsverfahren für mindestens eine elektrische Lampe (EL) an einer Schaltungsanordnung mit einem Wechselrichter mit mindestens einem ersten (T3) und einem zweiten (T4) in Serie zueinander angeordneten Brückentransistor, einer ersten Ansteuerschaltung (AS1) für den ersten Brückentransistor (T3), einer zweiten Ansteuerschaltung (AS2) für den zweiten Brückentransistor (T4), wobei die erste (AS1) und die zweite (AS2) Ansteuerschaltung den ersten (T3) und den zweiten (T4) Brückentransistor derart ansteuern, dass diese im Normalbetrieb der Lampe (EL) alternierend voll ein- und ausschalten, und mindestens einer Schutzvorrichtung (TS1; TS2); **dadurch gekennzeichnet, dass** die mindestens eine Schutzvorrichtung (TS1) bei einem Wert einer Referenzspannung, die mit der Spannung über dem gerade ausgeschalteten Brückentransistor (T3) korreliert ist, über einem vorgebbaren Grenzwert den gerade voll eingeschalteten Brückentransistor (T4) der Serienschaltung derart ansteuert, dass er nicht mehr voll eingeschaltet ist.

## Claims

1. Circuit arrangement for operating at least one electric lamp (EL) having
- an inverter having at least one first bridge transistor (T3) and one second bridge transistor (T4) which are arranged in series with one another,
- a first drive circuit (AS1) for the first bridge transistor (T3);
- a second drive circuit (AS2) for the second bridge transistor (T4);
the first drive circuit (AS1) and the second drive circuit (AS2) being designed to drive the first bridge transistor (T3) and the second bridge transistor (T4) such that they switch alternately completely on and off during normal operation of the lamp (EL); and
- at least one protective apparatus (TS1; TS2);
**characterized in that** the at least one protective apparatus (TS1; TS2) is designed, in the case of a value for a reference voltage, which is correlated with the voltage across the bridge transistor (T3; T4) which has just been switched off, above a predeterminable limit value, to drive the bridge transistor (T4; T3), which has just been completely switched on, of the series circuit such that it is no longer completely switched on.

2. Circuit arrangement according to Claim 1, **characterized in that** the at least one protective apparatus (TS1; TS2) is designed, in the case of a value for a reference voltage, which is correlated with the voltage across the bridge transistor (T3; T4) which has just been switched off, above a predeterminable limit value, to drive the bridge transistor (T4; T3), which has just been completely switched on, of the series circuit such that it is operated in the linear range.

3. Circuit arrangement according to Claim 1, **characterized in that** the at least one protective apparatus (TS1; TS2) is designed, in the case of a value for a reference voltage, which is correlated with the voltage across the bridge transistor (T3; T4) which has just been switched off, above a predeterminable limit value, to drive the bridge transistor (T4; T3), which has just been completely switched on, of the series circuit such that it is switched off.

4. Circuit arrangement according to one of the preceding claims, **characterized in that** it is designed, in the case of a value for a reference voltage, which is correlated with the voltage across the bridge transistor (T3; T4) which has just been switched off, above a predeterminable limit value, to drive the two bridge transistors (T3, T4) such that they remain switched off, at least over a predeteminable period of time, in particular until the reference voltage has again fallen below the predeterminable limit value.

5. Circuit arrangement according to one of the preceding claims, **characterized in that** it comprises a first protective apparatus (TS1) and a second protective apparatus (TS2), the first protective apparatus (TS1) being designed to switch the second bridge transistor (T4) off if a first reference voltage, which is correlated with the voltage present at the first bridge transistor (T3), exceeds a predeterminable limit value, and the second protective apparatus (TS2) being designed to switch the first bridge transistor (T3) off if a second reference voltage, which is correlated with the voltage present at the second bridge transistor (T4), exceeds a predeterminable limit value.

6. Circuit arrangement according to one of the preceding claims, **characterized in that** each bridge transistor (T3; T4) has a control terminal, the at least one protective apparatus (TS1; TS2) being coupled between the drive circuit (AS1; AS2) and the control terminal of the associated bridge transistor (T3; T4).

7. Circuit arrangement according to Claim 6, **characterized in that** each bridge transistor (T3; T4) has a reference terminal, the at least one protective apparatus (TS1; TS2) being arranged in parallel with the control terminal-reference terminal path of the associated bridge transistor (T3; T4) and being designed to short-circuit the control terminal-reference terminal path of the associated bridge transistor (T3; T4) for disconnection purposes.

8. Circuit arrangement according to one of the preceding claims, **characterized in that** the predeterminable limit value is less than or equal to the maximum permissible reverse voltage of a bridge transistor (T3; T4).

9. Circuit arrangement according to one of the preceding claims, **characterized in that** the respective reference voltage corresponds to the voltage across the switched-off bridge transistor (T3; T4).

10. Circuit arrangement according to one of Claims 1 to 8,
**characterized in that** the respective reference voltage corresponds to the sum of the following voltages:
- the voltage across the switched-off bridge transistor (T3; T4); and
- the voltage at the output of the drive circuit (AS1; AS2) of the switched-on bridge transistor (T3; T4).

11. Circuit arrangement according to one of the preceding claims, **characterized in that** the protective apparatus (TS1; TS2) is designed to leave the associated bridge transistor (T3; T4) switched off until the value for the reference voltage has again fallen below the predeterminable limit value.

12. Operating method for at least one electric lamp (EL) using a circuit arrangement having an inverter having at least one first bridge transistor (T3) and one second bridge transistor (T4) which are arranged in series with one another, a first drive circuit (AS1) for the first bridge transistor (T3), a second drive circuit (AS2) for the second bridge transistor (T4), the first drive circuit (AS1) and the second drive circuit (AS2) driving the first bridge transistor (T3) and the second bridge transistor (T4) such that they switch alternately completely on and off during normal operation of the lamp (EL), and at least one protective apparatus (TS1; TS2); **characterized in that**, in the case of a value for a reference voltage, which is correlated with the voltage across the bridge transistor (T3) which has just been switched off, above a predeterminable limit value, the at least one protective apparatus (TS1) drives the bridge transistor (T4), which has just been completely switched on, of the series circuit such that it is no longer completely switched on.

## Revendications

1. Montage pour faire fonctionner au moins une lampe (EL) électrique, comprenant
- un onduleur ayant au moins un premier ( T3 ) et un deuxième ( T4 ) transistors en pont montés en série l'un avec l'autre,
- un premier circuit ( AS1 ) de commande du premier transistor ( T3 ) en pont ;
- un deuxième circuit ( AS2 ) de commande du deuxième transistor ( T4 ) en pont ;
dans lequel le premier ( AS1 ) et le deuxième ( AS2 ) circuits de commande sont conçus pour commander le premier ( T3 ) et le deuxième ( T4 ) transistors en pont de façon à ce que ceux-ci soient, en fonctionnement normal de la lampe ( EL ), alternance, complètement à l'état passant et à l'état bloqué ; et
- au moins un dispositif ( TS1 ; TS2 ) de protection ;
**caractérisé en ce que** le au moins un dispositif ( TS1 ; TS2 ) de protection est conçu pour, pour une valeur d'une tension de référence, qui est corrélée à la tension aux bornes du transistor ( T3 ; T4 ) en pont précisément mis à l'état bloqué, commander, au-delà d'une valeur limite pouvant être prescrite, le transistor ( T4 ; T3 ) en pont précisément mis complètement à l'état passant du circuit série de façon à ce qu'il ne soit plus mis complètement à l'état passant.

2. Montage selon la revendication 1, **caractérisé en ce que** le au moins un dispositif ( TS1 ; TS2 ) de protection est conçu pour, pour une valeur d'une tension de référence, qui est corrélée à la tension aux bornes du transistor ( T3 ; T4 ) en pont précisément mis à l'état bloqué, commander, au-delà d'une valeur limite pouvant être prescrite, le transistor ( T3 ; T4 ) en pont précisément mis à l'état bloqué du circuit série de façon à ce qu'il fonctionne dans le domaine linéaire.

3. Montage selon la revendication 1, **caractérisé en ce que** le au moins un dispositif ( TS1 ; TS2 ) de protection est conçu pour, pour une valeur d'une tension de référence, qui est corrélée à la tension aux bornes du transistor ( T3 ; T4 ) en pont précisément mis à l'état bloqué, commander, au-delà d'une valeur limite pouvant être prescrite, le transistor ( T3 ; T4 ) en pont précisément mis à l'état bloqué du circuit série de façon à ce qu'il soit mis à l'état bloqué.

4. Montage suivant l'une des revendications précédentes, **caractérisé en ce qu'**il est conçu pour, pour une valeur d'une tension de référence qui est corrélée à la tension aux bornes du transistor ( T3 ; T4 ) en pont précisément mis à l'état bloqué, commander, au-delà d'une valeur limite pouvant être prescrite, les deux transistors ( T3 ; T4 ) en pont de façon à ce qu'ils restent à l'état bloqué, au moins pendant un laps de temps pouvant être prescrit, notamment jusqu'à ce que la tension de référence s'abaisse à nouveau en dessous de la valeur limite pouvant être prescrite.

5. Montage suivant l'une des revendications précédentes, **caractérisé en ce qu'**il comprend un premier ( TS1 ) et un deuxième ( TS2 ) dispositifs de protection, dans lequel le premier dispositif ( TS1 ) de protection est conçu pour mettre le deuxième transistor ( T4 ) en pont à l'état bloqué lorsqu'une première tension de référence, qui est corrélée à la tension s'appliquant au premier transistor ( T3 ) en pont, dépasse une valeur limite pouvant être prescrite et dans lequel le deuxième dispositif ( TS2 ) de protection est conçu pour mettre à l'état bloqué le premier transistor ( T3 ) en pont, lorsqu'une deuxième tension de référence, qui est corrélée à la tension s'appliquant au deuxième transistor ( T4 ) en pont, dépasse une valeur limite pouvant être prescrite.

6. Montage suivant l'une des revendications précédentes, **caractérisé en ce que** chaque transistor ( T3 ; T4 ) en pont a une borne de commande, le au moins un dispositif ( TS1 ; TS2 ) de protection étant monté entre le circuit ( AS1; AS2 ) de commande et la borne de commande du transistor ( T3 ; T4 ) en pont associée.

7. Montage suivant la revendication 6, **caractérisé en ce que** chaque transistor ( T3 ; T4 ) en pont a une borne de référence, le au moins un dispositif ( TS1 ; TS2 ) de protection étant monté en parallèle à la section borne de commande-borne de référence du transistor ( T3 ; T4 ) en pont associé, et étant conçu pour court-circuiter pour la mise à l'état bloqué de la section borne de commande-borne de référence du transistor ( T3 ; T4 ) en pont associé.

8. Montage suivant l'une des revendications précédentes, **caractérisé en ce que** la valeur limite pouvant être prescrite est inférieure ou égale à la tension de blocage maximum admissible d'un transistor ( T3 ; T4 ) en pont.

9. Montage suivant l'une des revendications précédentes, **caractérisé en ce que** la tension respective de référence correspond à la tension, aux bornes du transistor ( T3 ; T4 ) en pont mis à l'état bloqué.

10. Montage selon l'une des revendications 1 à 8, **caractérisé en ce que** la tension respective de référence correspond à la somme des tensions suivantes :
- la tension aux bornes du transistor ( T3 ; T4 ) en pont mis à l'état bloqué ;
- la tension à la sortie du circuit ( AS1 ; AS2 ) de commande du transistor ( T3 ; T4 ) en pont mis à l'état passant.

11. Montage selon l'une des revendications précédentes, **caractérisé en ce que** le dispositif ( TS1 ; TS2 ) de protection est conçu pour laisser à l'état bloqué le transistor ( T3 ; T4 ) en pont associé jusqu'à ce que la valeur de la tension de référence se soit abaissée à nouveau en dessous de la valeur limite pouvant être prescrite.

12. Procédé pour faire fonctionner au moins une lampe ( EL ) électrique sur un montage ayant un onduleur comprenant au moins un premier ( T3 ) et un deuxième ( T4 ) transistors en pont montés en série l'un par rapport l'autre, un premier circuit ( AS1 ) de commande du premier transistor ( T3 ) en pont, un deuxième circuit ( AS2 ) de commande du deuxième transistor ( T4 ) en pont, le premier ( AS1 ) et le deuxième ( AS2 ) circuits de commande commandant le premier ( T3 ) et le deuxième ( T4 ) transistors en pont de façon à ce que ceux-ci soient mis complètement à l'état passant et à l'état bloqué en alternance en fonctionnement normal de la lampe ( EL ) et au moins un dispositif ( TS1 ; TS2 ) de protection, **caractérisé en ce que** le au moins un dispositif ( TS1 ) de protection commande, pour une valeur d'une tension de référence qui est corrélée à la tension aux bornes du transistor ( T3 ) en pont précisément mis à l'état bloqué au-dessus d'une valeur limite pouvant être prescrite, le transistor ( T4 ) en pont précisément complètement mis à l'état bloqué du circuit série de façon à ce qu'il ne soit plus mis complètement à l'état passant.
